# FASCICULE DE BREVET EUROPEEN

(11) **EP 2 442 967 B1**
(45) Date de publication et mention de la délivrance du brevet: **14.08.2013**
(21) Numéro de dépôt: 10725749.5
(22) Date de dépôt: 21.06.2010
(51) Int. Cl.: B29D 30/06, B29C 33/10

(54) **DISPOSITIF AMOVIBLE DE MOULAGE D'UNE PAROI FLEXIBLE DANS UN SILLON DE SCULPTURE DE PNEUMATIQUE**
ENTFERNBARE VORRICHTUNG ZUR FORMUNG EINER BIEGSAMEN WAND IN DER RILLE EINES REIFENPROFILS
REMOVABLE DEVICE FOR MOLDING A FLEXIBLE WALL IN THE GROOVE OF A TIRE PATTERN

(30) Priorité: 19.06.2009 FR 0902999
(43) Date de publication de la demande: 25.04.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: VILLENEUVE, Bernard, F-63450 Saint Amant Tallende (FR); GOMET, Christian, F-63100 Clermont-Ferrand (FR)
(74) Mandataire: Diernaz, Christian
(86) Numéro de dépôt international: PCT/EP2010/058697
(87) Numéro de publication internationale: WO 2010/146180

(56) Documents cités:
- EP-A1- 0 722 816
- DE-A1- 19 914 215
- JP-A- 8 072 061
- JP-A- 2000 102 925
- JP-A- 2000 343 916
- JP-A- 2003 211 922
- JP-A- 2007 210 569
- US-A- 6 138 982

## Description

### DOMAINE DE L'INVENTION

L'invention concerne le domaine de la fabrication des pneumatiques, et en particulier celui des moules utilisés pour la vulcanisation.

Plus particulièrement, l'invention s'intéresse au moulage de parois flexibles disposées dans un sillon de sculpture de pneumatique.

### ETAT DE LA TECHNIQUE

Les sillons de la sculpture ont pour objet de drainer et d'évacuer l'eau, lorsque le pneumatique circule sur un sol mouillé ou détrempé. Ces sillons sont à l'origine d'une partie des phénomènes de bruit de roulage, en ce qu'ils constituent des zones d'accumulation d'air sous pression générant des ondes sonores. Les sillons sont disposés dans le sens circonférentiel et dans le sens axial, et leur disposition, leur dimension ainsi que leur nombre font l'objet d'études détaillées de la part des concepteurs de sculptures de pneumatiques.

Dans le but de réduire le niveau de bruit de roulage des pneumatiques, tout en préservant les qualités de drainage de l'eau, il est connu de l'état de la technique de disposer des parois de faible épaisseur et flexibles, dans une direction transversale à la direction des sillons. Ces parois, connues aussi sous l'appellation de flap, présentent la particularité, à l'image d'une porte, de s'étendre transversalement depuis une des parois du sillon et de rester en position fermée lorsque le pneumatique roule sur sol sec afin de bloquer la diffusion des ondes sonores, et de pouvoir s'ouvrir lorsque le pneumatique roule sur sol mouillé pour permettre l'évacuation de l'eau pénétrant dans le sillon de drainage.

Les publications FR 2 715 891, GB 450 723 ou encore EP 908 330 décrivent des formes d'exécution différentes de ces parois flexibles.

On observera que les formes d'exécution les plus courantes concernent des parois flexibles s'étendant depuis la paroi du fond du sillon, en raison de l'absence de contre dépouilles s'opposant au démoulage du pneumatique, à l'issu de l'étape de vulcanisation. La paroi flexible présente une ou plusieurs découpes radiales, autorisant ladite paroi à pivoter autour d'un point d'attache avec le sillon lorsque la paroi flexible passe d'une position ouverte à une position fermée. L'épaisseur des parois flexibles, varie entre 0,2 mm et 1 mm. La largeur des découpes peut être ajustée à volonté en fonction de la forme particulière que l'on souhaite donner aux bords latéraux de la paroi flexible.

En pratique, les moules destinés au moulage des pneumatiques comportant ces artifices comprennent des fentes sensiblement radiales pratiquées dans des cordons destinés à mouler les sillons de drainage, lesdites fentes s'étendant transversalement par rapport à la direction desdits cordons.
La demande de brevet JP 2003 211 922 A décrit un moule de cuisson pneumatique comprenant un insert formant une partie du cordon.

Toutefois, la réalisation de ces fentes, avec le degré de précision requis, s'accompagne d'un grand nombre de difficultés, en particulier lorsqu'on utilise des techniques de réalisation des moules par coulage de matière fondue sur une matrice perdue, généralement en plâtre, et dans laquelle la finesse des éléments rend ces derniers excessivement fragile, ou pire encore, lorsqu'on opère directement sur le moule fini, en raison de l'encombrement des outillages de taille lorsque l'on cherche à accéder dans les éléments de sculpture.

L'objet de l'invention est de proposer une solution permettant de s'affranchir des problèmes soulevés ci-dessus.

### BREVE DESCRIPTION DE L'INVENTION

Le moule selon l'invention comprend des éléments de garniture disposés circonférentiellement, et destinés à former l'empreinte de la bande de roulement dudit pneumatique, lesdits éléments de garniture comportant des cordons destinés à former l'empreinte des sillons de la sculpture, se caractérise en ce qu'un ou plusieurs inserts, comportant un corps solidaire de la garniture et une tête, comportant une fente destinée à contribuer au moulage d'une paroi flexible de faible épaisseur articulée au niveau d'au moins une des parois du sillon, de préférence à la paroi du fond du sillon. Les inserts sont disposés dans au moins un desdits cordons de sorte que la fente est placée sensiblement perpendiculairement à la direction longitudinale du sillon.

De cette manière, il est possible de réaliser lesdits inserts dans une phase de fabrication séparée, à l'aide de moyens adaptés, sans avoir à souffrir des inconvénients cités ci-dessus.

Selon un autre aspect de l'invention, lesdits inserts peuvent être implantés de manière fixe dans le cordon, ou être amovibles de sorte qu'il est possible de les retirer du moule. Ce mode de réalisation s'avère particulièrement avantageux en ce qu'il permet d'évacuer les matières susceptibles d'encombrer le volume destiné au moulage desdites parois flexibles.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- les Fig.1a, Fig.1b, Fig.1c, Fig.1d représentent schématiquement une vue en perspective, une vue de face, une vue de dessous et une vue de dessus d'un insert selon un premier mode de réalisation,
- les Fig.2a, Fig.2b, Fig.2c représentent schématiquement une vue en perspective, une vue de face, et une vue de dessus d'un insert selon un second mode de réalisation,
- les Fig.3a, Fig.3b, Fig.3c représentent schématiquement différentes vues en perspective d'un insert selon un troisième mode de réalisation,
- les Fig.4a, Fig.4b, Fig.4c représentent schématiquement des vues de dessus d'autres modes de réalisation de l'insert,
- la Fig.5 représente schématiquement une vue en perspective d'un élément de garniture comprenant des inserts selon le premier mode de réalisation et le second mode de réalisation,
- les Fig.6a, Fig 6b présentent le montage d'inserts selon le second mode de réalisation ou le troisième mode de réalisation dans un élément de garniture.

Dans la suite de la description, la direction XX' correspond à une direction circonférentielle du moule, la direction YY' correspond à une direction transversale du moule perpendiculaire à la direction circonférentielle et la direction ZZ' correspond à une direction radiale du moule perpendiculaire à la direction circonférentielle et à la direction transversale.

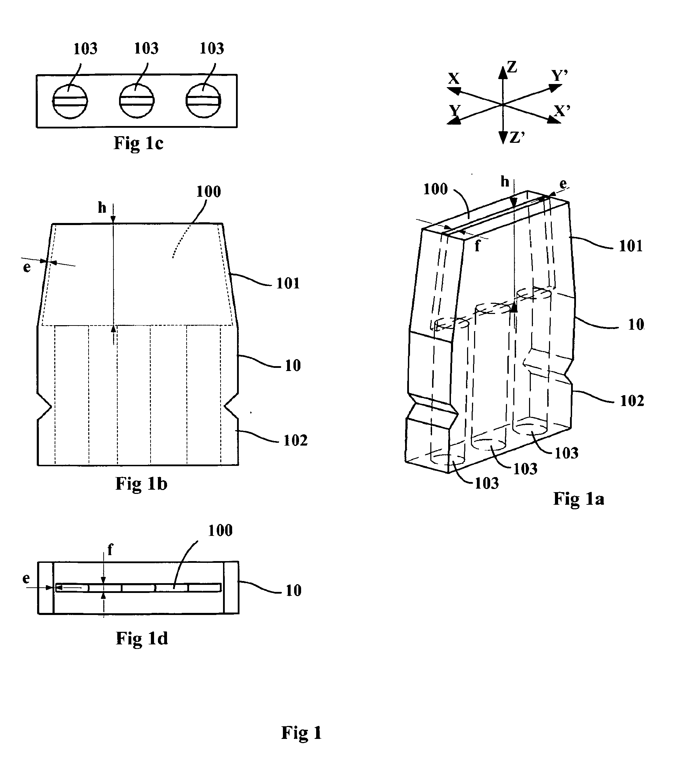

Selon un premier mode de réalisation, l'insert 10 illustré à la figure 1, comprend une tête 101 et un corps 102. La tête de l'insert est destinée à être insérée dans un cordon de moulage (non représenté). Le corps a pour fonction d'assurer l'ancrage de la tête 101 dans un élément de garniture.

La tête de l'insert comporte une fente 100 destinée à mouler une paroi flexible. La fente présente ici une largeur f. La largeur f correspond à l'épaisseur de la paroi flexible, et peut être comprise entre 0,2 mm et 1 mm.

La fente 100 s'étend dans la profondeur de la tête de l'insert sur une hauteur h et débouche sur une surface supérieure de la tête de l'insert en formant une ouverture.

La forme externe des deux parois opposées de la tête, sensiblement perpendiculaires à la direction transversale YY', ainsi que celle de la paroi de la tête, perpendiculaire à la direction ZZ', dans laquelle débouche la fente 100, est adaptée pour former une surface continue avec la surface externe du cordon, de manière à assurer le moulage du sillon du pneumatique. Ainsi, les deux parois latérales opposées dans la direction transversale sont destinées à mouler les bords du sillon, et la paroi de la tête dans laquelle débouche la fente est destinée à mouler le fond du sillon sur lequel la paroi flexible est articulée.

La fente 100 ne débouche pas sur les parois latérales externes opposées dans la direction transversale de la tête de l'insert. Les parois latérales transversales de la fente sont séparées des parois transversales externes de la tête de l'insert par une cloison d'épaisseur e. De la sorte, la paroi flexible n'a pas de liaison avec les parois latérales du sillon. L'épaisseur e de ladite cloison, telle que représentée, peut utilement être comprise entre 0,1 mm et 0,2 mm.

Cette cloison peut également avoir une largeur variable, comme cela a déjà été évoqué ci-dessus, lorsque l'on désire donner un profil particulier aux bords latéraux de la paroi flexible.

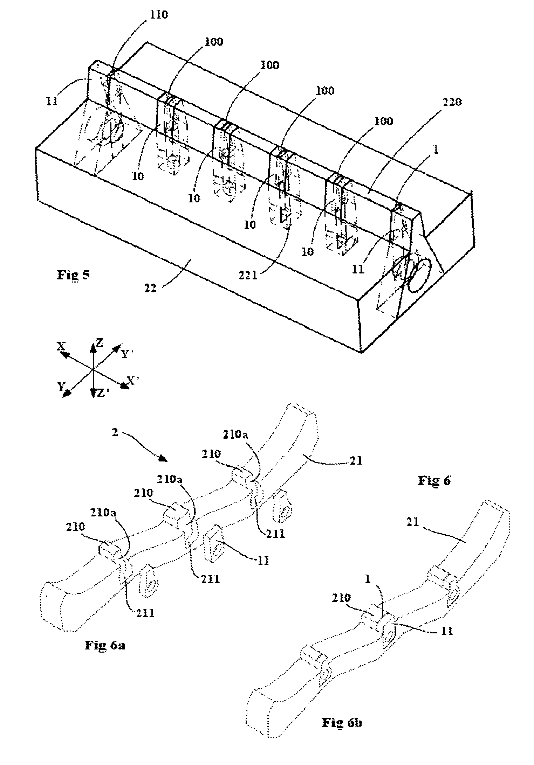

Le corps 102 de l'insert 10, a une forme adaptée pour s'insérer dans un logement 221 prévu à cet effet dans le corps de l'élément de garniture comme cela est illustré à la Fig.5.

La portion de l'élément de garniture de moulage 2 comprend une base 22 et un cordon 220.

La base 22 est adaptée pour mouler la surface de roulement d'une bande de roulement d'un pneumatique.

Le cordon 220 fait saillie depuis la base 22 et est adapté pour mouler un sillon dans la bande de roulement.

Le cordon 220 s'étend principalement ici selon la direction circonférentielle XX'.

Dans une variante de réalisation, le cordon 220 s'étend principalement selon la direction transversale YY'.

Les inserts 10 sont disposés dans le logement 221, de sorte que la fente 100 soit orientée selon une direction sensiblement perpendiculaire au cordon 220. Ainsi, si le cordon s'étend principalement selon la direction circonférentielle XX' pour former un sillon circonférentiel, la fente est orientée selon la direction transversale YY'. En variante, si le cordon s'étend principalement selon la direction transversale YY' pour former un sillon transversal, la fente est orientée selon la direction circonférentielle XX'.

La forme de la tête de l'insert est ici ajustée pour former une surface continue avec la surface externe du cordon.

Les inserts peuvent être réalisés au cours d'opérations d'usinage séparées de l'étape de finition du moule, permettant ainsi de maîtriser la géométrie de l'entaille. Une fois placés dans le cordon, ils conservent toutes leurs caractéristiques géométriques.

En variante, les inserts peuvent être obtenus par injection thermoplastique.

Le logement 221 est obtenu par usinage du corps de garniture, par exemple par électroérosion.

En variante, le logement 221 est obtenu directement par moulage.

Le corps de l'insert 10, selon une première forme de réalisation, peut être fixé par collage dans ledit logement 221.

Il est également possible de noyer le corps de l'insert dans le matériau de fonderie, généralement de l'aluminium, au cours d'une des étapes de fabrication de la portion de garniture de moulage, sans qu'il soit nécessaire de mettre en oeuvre des moyens sophistiqués pour prévenir la pénétration de l'aluminium dans l'entaille.

L'insert représenté à la figure 1 comprend également des moyens d'évacuation de l'air susceptible d'être emprisonné dans la fente lors du moulage de la paroi flexible. Ces moyens sont constitués par des évents de forme cylindrique 103 traversant le corps de l'insert et reliant la base de la fente à la paroi inférieure de l'insert opposée à la paroi dans laquelle débouche la fente 100.

L'insert 10 est ici représenté d'un seul tenant.

En variante, l'insert 10 peut être formé de plusieurs parties préalablement assemblées avant l'insertion dudit insert 10 dans le logement 21. L'insert 10 peut être formé, par exemple, de 2 ou 3 parties. Il est ainsi possible d'appliquer plus facilement un produit particulier sur des zones de l'insert formant la fente 100, tel qu'un anti-collant facilitant le démoulage d'une paroi flexible moulée par ladite fente 100.

L'anti-collant peut être, par exemple, du xylane.

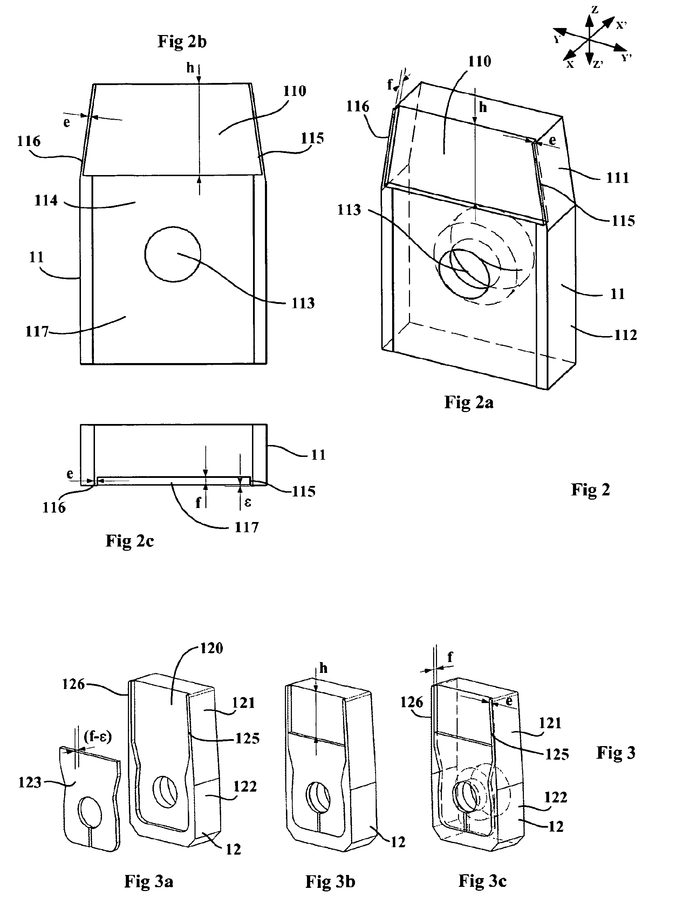

La seconde forme de réalisation de l'invention illustrée à la figure 2, et aux figures 2a, 2b et 2c représente un insert 11 comprenant également une tête 111 et un corps 112.

La tête de l'insert 111 comporte une réservation 110 pratiquée sur une des faces latérales de l'insert perpendiculaire à la direction XX'. Cette réservation s'étend dans la direction ZZ' sur une hauteur h, et a une largeur f correspondant sensiblement à l'épaisseur de la paroi flexible que l'on cherche à réaliser.

La réservation 110 est bordée des deux cotés des parois de la tête perpendiculaires à la direction transversale par des cloisons 115 et 116, d'épaisseur e.

Le corps 112 de l'insert comporte un perçage 113 destiné à recevoir un élément de fixation de l'insert sur la garniture, tel que par exemple une vis.

La réservation 110 coopère avec la paroi du logement située au niveau du cordon et placée en vis-à-vis de la tête de l'insert de manière à former une fente permettant de mouler la paroi flexible.

Pour faciliter les opérations de montage et de démontage, lesdits logements peuvent utilement être aménagés dans une des faces latérales externes de l'élément de garniture, comme cela est illustré à la figure 6.

L'élément de garniture 2 représenté sur la figure 6 comprend une base 21 comportant des cordons 210. Le cordon 210 est interrompu au niveau d'un des bords longitudinaux de l'élément de garniture de manière à permettre l'insertion du corps d'un insert 11 selon le second mode de réalisation de l'invention.

L'insert est disposé de sorte que la réservation 110 soit placée en vis-à-vis de la paroi d'extrémité du cordon 210a de sorte que, lorsque l'insert est fixé, à l'aide d'un élément de fixation, sur la paroi du cordon, la réservation 110 et la paroi du cordon 210a délimitent la forme d'une fente 1 de profondeur h, de largeur f, et limitée par les cloisons latérales 115 et 116.

Comme il a déjà été dit, cette forme de réalisation présente un avantage supplémentaire par rapport à la première forme de réalisation. En effet, on observe, lors de l'utilisation répétée de l'élément de garniture pour produire des pneumatiques, que l'entaille a une tendance à fixer les résidus de cuisson, et à s'obstruer progressivement. Il est alors possible de séparer les éléments de garniture du moule et de détacher les inserts 11 de manière à effectuer l'opération de nettoyage par simple brossage de la surface de la réservation 110 et de la paroi de l'extrémité du cordon 210a de l'élément de garniture.

Pour évacuer l'air emprisonné dans l'entaille lors du moulage de la paroi flexible à l'aide d'un insert 11 selon cette seconde forme de réalisation, il est possible de réaliser un léger alésage, d'une profondeur ε, sur la partie centrale de la paroi 117 du corps de l'insert sur laquelle est réalisée la réservation et placée en vis-à-vis de la paroi du cordon 210a, de sorte que le contact avec la dite paroi du cordon est assuré par les parties latérales transversalement opposées de la paroi 117. La valeur ε de l'alésage peut utilement être comprise entre 0,03 mm et 0,1 mm.

On observera qu'un insert selon ce second mode de réalisation peut comporter une réservation sur chacune de ses deux parois perpendiculaire à la direction longitudinale de sorte qu'une réservation coopère avec la paroi transversale 210a du cordon de l'élément de garniture auquel ledit insert est fixé, et que la réservation disposée de l'autre coté de l'insert coopère avec la paroi du cordon de l'élément de garniture circonférentiellement adjacent.

On notera également que le logement 211 et la paroi transversale 210 sont obtenus par usinage de l'élément de garniture 21, par exemple par électroérosion.

Dans une variante de réalisation, le logement 211 et la paroi transversale 210 sont obtenus directement par moulage.

L'insert 12 illustré à la figure 3 est une variante de réalisation de l'insert 11. Il a été observé que l'opération d'alésage de la face 117 du corps de l'insert dans le but de pratiquer un évent, est complexe en raison de la taille réduite de l'insert. Aussi, il a été proposé de réaliser la réservation 120 sur toute la hauteur de la face de l'insert, et de disposer une pièce intermédiaire 123 également appelée clinquant 123, d'épaisseur (f-ε), sur la paroi du corps de l'insert. La réservation utile au moulage de la paroi flexible est alors délimitée par le bord du clinquant, et par les cloisons 125 et 126 d'épaisseur e.

De manière similaire à l'insert 11 selon la seconde forme de réalisation, le corps de l'insert 12 et du clinquant 123, comportent également un perçage 113 permettant d'introduire un élément de fixation.

L'insert illustré à la figure 3 est disposé de sorte que la réservation 120 soit placée en vis-à-vis de la paroi d'extrémité du cordon 210a. Ainsi, lorsque l'insert est fixé sur la paroi du cordon, la réservation 120 et la paroi du cordon 210a délimitent la forme d'une fente de profondeur h, de largeur f, ladite fente étant limitée par les cloisons 125 et 126.

Dans une variante de réalisation, il est possible de prévoir une plaque supplémentaire en appui sur les cloisons 125 et 126 en vue de délimiter la fente, à la place de la paroi du cordon 210a. Il est alors possible d'utiliser l'insert de ce mode de réalisation particulier dans un logement 221 prévu dans le corps de l'élément de garniture, comme illustré à la figure 5.

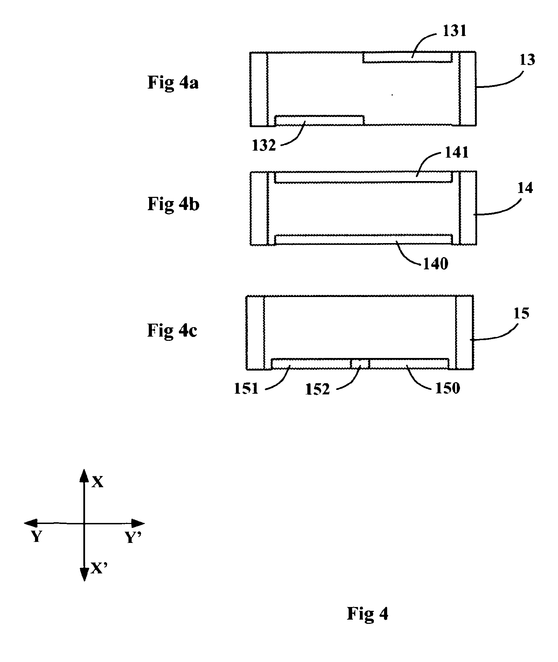

A titre d'exemple, la figure 4 représente, en vue de dessus des variantes de positionnement de la réservation permettant d'obtenir des arrangements particuliers de la paroi flexible.

L'insert 13 illustré à la figure 4a comporte deux demi-réservations 131 et 132, disposées sur chacune des faces perpendiculaires à la direction longitudinale XX', et placées transversalement sur des cotés opposés desdites faces.

L'insert 14 illustré à la figure 4b comporte deux réservations 140 et 141, disposées sur chacune des faces perpendiculaires à la direction longitudinale XX'.

La figure 4c illustre le cas d'un insert comprenant deux demi-réservations 150 et 151 disposées sur une même face et séparés par une cloison 152.

Dans des variantes de réalisation, il est possible de combiner les différents enseignements issus de la présente description de manière à mouler des formes de parois flexibles adaptées à différentes configuration comme cela est illustré à la figure 5, mais également d'adapter le choix de l'insert au mode de réalisation de la garniture de moulage.

L'insert 10, 11, 12, 13, 14, 15 est ici formé dans un matériau métallique, tel que de l'acier.

Dans une variante de réalisation, l'insert 10, 11, 12, 13, 14, 15 comprend un matériau anti-adhésif tel que du polyétheréthercétone en vue de faciliter le moulage et le démoulage d'une paroi flexible moulée par ledit insert.

Dans une autre variante de réalisation, l'insert 10, 11, 12, 13, 14, 15 comprend du polytétrafluoroéthylène (PTFE) pour faciliter le moulage et le démoulage de la paroi flexible.

## Revendications

1. Moule de cuisson de pneumatique comprenant au moins un élément de garniture (21, 22) pour mouler la bande de roulement dudit pneumatique, ledit élément de garniture (21, 22) comprenant au moins un cordon (210, 220) pour mouler un sillon dans la bande de roulement ledit moule de cuisson comporte au moins un insert (10, 11, 12, 13, 14, 15) formant une partie du cordon (210, 220), **caractérisé en ce que** :
- ledit insert délimitant partiellement ou en totalité une fente (1,100) s'étendant dans la profondeur du cordon ;
- la fente est orientée sensiblement perpendiculairement au cordon ;
- la fente est configurée pour mouler une paroi flexible de faible épaisseur venue de matière avec au moins une paroi du sillon moulé par le cordon.

2. Moule de cuisson selon la revendication 1 dans lequel la fente (1, 100) est configurée pour mouler une paroi flexible venue de matière avec le fond du sillon.

3. Moule de cuisson selon l'une quelconque des revendications 1 à 2 dans lequel la largeur (f) de la fente (1, 100) est comprise entre 0,2 et 1 mm.

4. Moule de cuisson selon l'une quelconque des revendications 1 à 3, dans lequel l'insert est disposé de manière amovible dans un logement (221, 211) réalisé dans l'élément de garniture (21, 22).

5. Moule de cuisson selon l'une quelconque des revendications 1 à 4, dans lequel la fente (1) est délimitée par l'insert (11, 12) et une paroi (210a) d'extrémité du cordon (210).

6. Moule de cuisson selon l'une quelconque des revendications 1 à 5 dans lequel le cordon (210, 220) comprend au moins un évent débouchant dans la fente pour l'évacuation de l'air.

7. Moule de cuisson selon la revendication 6 dans lequel l'évent (103) est de forme cylindrique.

8. Moule de cuisson selon la revendication 6 dans lequel l'évent est délimité par une paroi (117) de l'insert et la paroi d'extrémité (210a) du cordon.

9. Moule de cuisson selon la revendication 6 dans lequel l'insert comprend un corps principal et une pièce intermédiaire (123) disposée dans ledit corps principal, l'évent étant délimité par ladite pièce intermédiaire (123) et la paroi d'extrémité (210a) du cordon.

10. Moule de cuisson selon la revendication 9, dans lequel la pièce intermédiaire (123) a une épaisseur (f-c) inférieure à la largeur (f) de la fente (1).

## Patentansprüche

1. Vulkanisierungsform eines Luftreifens, die mindestens ein Auskleidungselement (21, 22) enthält, um den Laufstreifen des Luftreifens zu formen, wobei das Auskleidungselement (21, 22) mindestens einen Wulst (210, 220) enthält, um eine Rille im Laufstreifen zu formen, wobei die Vulkanisierungsform mindestens einen Einsatz (10, 11, 12, 13, 14, 15) aufweist, der einen Teil des Wulsts (210, 220) formt, **dadurch gekennzeichnet, dass**:
- der Einsatz teilweise oder ganz einen Schlitz (1, 100) begrenzt, der sich in die Tiefe des Wulsts erstreckt;
- der Schlitz im Wesentlichen lotrecht zum Wulst ausgerichtet ist;
- der Schlitz konfiguriert ist, um eine elastische Wand geringer Dicke zu formen, die aus einem Material mit mindestens einer Wand der vom Wulst geformten Rille besteht.

2. Vulkanisierungsform nach Anspruch 1, wobei der Schlitz (1, 100) konfiguriert ist, um eine elastische Wand zu formen, die aus einem Material mit dem Boden der Rille besteht.

3. Vulkanisierungsform nach einem der Ansprüche 1 bis 2, wobei die Breite (f) des Schlitzes (1, 100) zwischen 0,2 und 1 mm liegt.

4. Vulkanisierungsform nach einem der Ansprüche 1 bis 3, wobei der Einsatz entfernbar in einer im Auskleidungselement (21, 22) ausgeführten Aufnahme (221, 211) angeordnet ist.

5. Vulkanisierungsform nach einem der Ansprüche 1 bis 4, wobei der Schlitz (1) vom Einsatz (11, 12) und von einer Endwand (210a) des Wulsts (210) begrenzt wird.

6. Vulkanisierungsform nach einem der Ansprüche 1 bis 5, wobei der Wulst (210, 220) mindestens ein Entlüftungsloch enthält, das in den Schlitz zur Abfuhr der Luft mündet.

7. Vulkanisierungsform nach Anspruch 6, wobei das Entlüftungsloch (103) eine zylindrische Form hat.

8. Vulkanisierungsform nach Anspruch 6, wobei das Entlüftungsloch von einer Wand (117) des Einsatzes und von der Endwand (210a) des Wulsts begrenzt wird.

9. Vulkanisierungsform nach Anspruch 6, wobei der Einsatz einen Hauptkörper und ein im Hauptkörper angeordnetes Zwischenteil (123) enthält, wobei das Entlüftungsloch vom Zwischenteil (123) und von der Endwand (210a) des Wulsts begrenzt wird.

10. Vulkanisierungsform nach Anspruch 9, wobei das Zwischenteil (123) eine Dicke (f-ε) geringer als die Breite (f) des Schlitzes (1) hat.

## Claims

1. Tyre curing mould comprising at least one lining element (21, 22) for moulding the tread of said tyre, said lining element (21, 22) comprising at least one bead (210, 220) for moulding a groove in the tread, said curing mould comprises at least one insert (10, 11, 12, 13, 14, 15) forming a portion of the bead (210, 220), **characterized in that**:
- said insert partially or completely delimiting a slot (1, 100) extending into the depth of the bead;
- the slot is oriented substantially perpendicularly to the bead;
- the slot is configured in order to mould a flexible wall of reduced thickness made as one piece with at least one wall of the groove moulded by the bead.

2. Curing mould according to Claim 1, in which the slot (1, 100) is configured in order to mould a flexible wall made as one piece with the bottom of the groove.

3. Curing mould according to either of Claims 1 and 2, in which the width (f) of the slot (1, 100) is between 0.2 and 1 mm.

4. Curing mould according to any one of Claims 1 to 3, in which the insert is removably positioned in a housing (221, 211) made in the lining element (21, 22).

5. Curing mould according to any one of Claims 1 to 4, in which the slot (1) is delimited by the insert (11, 12) and an end wall (210a) of the bead (210).

6. Curing mould according to any one of Claims 1 to 5, in which the bead (210, 220) comprises at least one vent opening into the slot for venting the air.

7. Curing mould according to Claim 6, in which the vent (103) is of cylindrical shape.

8. Curing mould according to Claim 6, in which the vent is delimited by a wall (117) of the insert and the end wall (210a) of the bead.

9. Curing mould according to Claim 6, in which the insert comprises a main body and an intermediate part (123) positioned in said main body, the vent being delimited by said intermediate part (123) and the end wall (210a) of the bead.

10. Curing mould according to Claim 9, in which the intermediate part (123) has a thickness (f-ε) that is smaller than the width (f) of the slot (1).
